# EUROPÄISCHE PATENTSCHRIFT

(11) **EP 0 727 135 B1**
(45) Veröffentlichungstag und Bekanntmachung des Hinweises auf die Patenterteilung: **17.01.2001**
(21) Anmeldenummer: 95119597.3
(22) Anmeldetag: 13.12.1995
(51) Int. Cl.: A01F 12/40

(54) **Mähdrescher**
Combine
Moissonneuse-batteuse

(30) Priorität: 16.02.1995 DE 19505148
(43) Veröffentlichungstag der Anmeldung: 21.08.1996
(73) Patentinhaber: SAME DEUTZ-FAHR S.P.A., 24047 Treviglio (Bergamo) (IT)
(72) Erfinder: von Allwörden, Wilhelm, Dipl.-Ing., D-89168 Oberstotzingen (DE)
(74) Vertreter: Quinterno, Giuseppe

(56) Entgegenhaltungen:
- EP-A- 0 357 090
- WO-A-95/15077
- DE-A- 3 824 166
- DE-A- 3 825 125
- US-A- 4 637 406

## Beschreibung

Die Erfindung betrifft einen Mähdrescher mit einem am rückwärtigen Ende angeordneten Häcksler gemäß dem Oberbegriff des Patentanspruches 1.

Aus der deutschen Offenlegungsschrift 24 44 550 ist ein Mähdrescher mit einem am rückwärtigen Ende des Mähdreschersinnerhalb einer Strohhaube angeordneten Häcksler bekannt, wobei in einem Endbereich von Stroh abwerfenden Schüttlern ein Strohleitblech angeordnet ist, das in einer ersten Stellung die Einzugsöffnung des Häckslers abdeckt, wobei das von den Schüttlern abgeworfene Stroh über eine Ausfallöffnung abgegeben wird und in einer zweiten Stellung die Einzugsöffnung des Häckslers freigibt. In dieser Ausgestaltung ist es möglich, daß das von den Schüttlern abgeworfene Stroh (Langstroh) entweder direkt über die Ausfallöffnung auf das Feld geworfen wird, während es nach Verschwenken des Strohleitbleches möglich ist, das Langstroh durch den Häcksler zu führen, der das Langstroh zu Kurzstroh verarbeitet, welches ebenfalls auf das Feld geworfen und anschließend untergepflügt werden kann. Weitere Angaben zur Verarbeitung von weiteren Bestandteilen außer dem von den Schüttlern abgeworfenen Stroh sowie weitere Ausgestaltungen des Strohleitbleches sind dieser deutschen Offenlegungsschrift nicht zu entnehmen.

Der Erfindung liegt daher die Aufgabe zugrunde, einen Mähdrescher mit einem am rückwärtigen Ende innerhalb einer Strohhaube angeordneten Häcksler bereitzustellen, bei dem weitergehende Einstellungen gegeben sind sowie weitere Bestandteile des Erntegutes außer dem Langstroh verarbeitet werden können, um die weitere Verarbeitung der über das rückwärtige Ende des Mähdreschers abgegebenen Bestandteile des Erntegutes zu verbessern.

Diese Aufgabe wird dadurch gelöst, daß das Strohleitblech in eine weitere Stellung verschwenkbar ist, in der die Ausfallöffnung derart weitestgehend abgedeckt wird, daß zumindest ein von einer Reinigungseinrichtung des Mähdreschers abgegebener Teil des Erntegutes in die Einzugsöffnung des Häckslers gelangt.

Diese konstruktive Ausgestaltung und die Verschwenkbarkeit des Strohleitbleches in eine weitere Stellung hat den Vorteil, daß weitere Verarbeitungsmöglichkeiten für die Bestandteile des Erntegutes, die im Bereich des rückwärtigen Ende des Mähdreschers abgegeben werden, bestehen. Dies ist auch hinsichlich der anschließenden Verarbeitung nach der Abgabe durch den Mähdrescher von Vorteil, da entweder der anschließende Aufnahmevorgang der abgegebenen Bestandteile verbessert wird bzw. für den Fall, daß die abgegebenen Bestandteile auf dem Feld untergepflügt werden, eine umsatzförderliche Struktur gegeben ist. Darüber hinaus kann ein derart konstruktiv ausgestalteter Mähdrescher für jeden Einsatzfall angepaßt werden.

Bestanden bisher schon die Möglichkeiten, daß das von den Schüttlern abgeworfene Stroh entweder als Langstroh direkt über die Ausfallöffnung auf dem Feld abgelegt wird oder nach Verschwenken des Strohleitbleches das Langstroh durch den Häcksler geführt wird, womit eine Kurzstrohablage erzielt wird, kommt nun die dritte Möglichkeit dazu, daß das Strohleitblech in eine weitere Stellung verschwenkbar ist, in der die Ausfallöffnung derart weitestgehend abgedeckt wird, daß zumindest ein von einer Reinigungseinrichtung des Mähdreschers abgegebener Teil des Erntegutes ebenfalls in die Einzugsöffnung des Anbauhäckslers gelangt. Dies hat den Vorteil, daß auch dieser Teil des Erntegutes (insbesondere Spreu und Kurzstroh) mit dem Langstroh vermischt und gehäckselt und dann das derart entstandene Gemisch auf das Feld abgegeben wird. Dadurch ist ein schnelles Umsetzen im Boden nach dem Umpflügen gewährleistet.

In Weiterbildung der Erfindung ist der Schwenkpunkt des Strohleitbleches in Fahrtrichtung des Mähdreschers betrachtet in einem Bereich vor der Einzugsöffnung des Häckslers angeordnet, wobei eine besondere Anordnung darin besteht, daß der Schwenkpunkt an einer Kante der Einzugsöffnung des Häckslers angeordnet ist. Diese Anordnung, bei der insbesondere in Fahrtrichtung des Mähdreschers betrachtet, die Ausfallöffnung vor dem Schwenkpunkt des Strohleitbleches angeordnet ist, hat den Vorteil, daß in der Stellung des Strohleitbleches, in der die Einzugsöffnung des Häckslers abgedeckt ist, das von den Schüttlern abgeworfene Langstroh über die Ausfallöffnung auf das Feld gelangt und der von der Reinigungseinrichtung abgegebene Teil des Erntegutes auf diesem abgegebenen Langstroh abgelegt wird, wodurch gewährleistet ist, daß bei einem anschließenden Aufnahmevorgang auch die "kleineren" Bestandteile des Erntegutes wie Spreu oder Kurzstroh mit dem Langstroh zusammen aufgenommen werden. Dies ist auch für Testfahrten mit Mähdreschern von Bedeutung, da aus den abgegebenen Bestandteilen des Erntegutes Rückschlüsse auf den Reinigungsgrad der in dem Mähdrescher arbeitenden Komponenten (wie beispielsweise Dresch- oder Siebeinrichtungen) geschlossen werden kann.

In Weiterbildung der Erfindung sind die Lagerstellen des Strohleitbleches in der Strohhaube des Mähdreschers oder in einem Rahmen bzw. Gehäuse des Häckslers angeordnet. Damit sind verschiedene konstruktive Ausgestaltungsmöglichkeiten gegeben. So kann beispielsweise das Strohleitblech bei der Produktion des Mähdreschers schon in der Strohhaube angeordnet werden, während erst anschließend der Einbau des Häckslers (in Form eines Anbauhäckslers) erfolgt. Dabei kann die Strohhaube von dem Gehäuse des Mähdreschers gebildet sein oder ein eigenständiger Bestandteil sein, der an das Gehäuse des Mähdreschers angebaut wird und abnehmbar ist. Sind die Lagerstellen in einem Rahmen bzw. Gehäuse des Häckslers angeordnet, ist das Strohleitblech in vorteilhafter Weise schon an dem Häcksler (beispielsweise eines Anbauhäckslers) vormontiert, so daß diese Einheit leicht und schnell im Bereich unterhalb der Strohhaube montiert werden kann, was auch für die Servicefreundlichkeit von Bedeutung ist.

In Weiterbildung der Erfindung ist das Strohleitblech exzentrisch um den Schwenkpunkt verschwenkbar. Dies hat den Vorteil, daß die Schwenkbewegung durch eine entsprechende Ausgestaltung der exzentrischen Verschwenkung den konstruktiven Gegebenheiten angepaßt werden kann, so daß es in seinen jeweiligen Stellungen im Endbereich an den jeweils gegenüberliegenden Anschlag stellen, möglichst dicht anliegt. Solche Anschlagstellen sind beispielsweise die Strohhaube, ein Ende der Schüttler oder ein Endbereich der Ausfallöffnung. An den Anschlagstellen oder im Endbereich des Strohleitbleches können Dichtungen vorgesehen werden.

In Weiterbildung der Erfindung ist das Strohleitblech manuell im Bereich der Strohhaube oder fernbedient verschwenkbar. Ist das Strohleitblech manuell im Bereich der Strohhaube verschwenkbar, bietet es sich an, das Strohleitblech direkt über einen Handhebel oder unter Zwischenschaltung eines Hebelsystemes von außerhalb der Strohhaube in seine verschiedenen Stellungen zu verschwenken. Dabei ist es von Vorteil, wenn für diese drei verschiedenen Stellungen auch Raststellungen vorgesehen sind. Alternativ dazu ist es insbesondere zur Erhöhung des Komforts möglich, das Strohleiblech fernbedient beispielsweise von der Fahrerkabine des Mähdreschers aus zu verstellen. Zur fernbedienten Verschwenkung kommen insbesondere Aktuatoren wie beispielsweise Hydraulikzylinder oder ein elektromotorischer Stellantrieb in Frage, wobei auch weitere die die Verschwenkung des Strohleitbleches gestattenden Aktuatoren denkbar sind.

In Weiterbildung der Erfindung ist im Endbereich der Reinigungseinrichtung eine Fördereinrichtung angeordnet, die den von der Reinigungseinrichtung (wie beispielsweise Siebe oder ein Rücklaufboden) abgegebenen Teil des Erntegutes zumindest in Richtung der Ausfallöffnung fördern. Handelt es sich beispielsweise bei der Reinigungseinrichtung um die Siebe des Mähdreschers, erfährt der abzugebende Teil des Erntegutes wie beispielsweise Spreu oder Kurzstroh schon grundsätzlich eine Bewegung in Richtung der Ausfallöffnung beispielsweise durch ein unterhalb den Sieben angeordnetes Gebläse, das in üblicher Weise dazu dient, die Körner von den übrigen Bestandteilen zu trennen. Durch die Anordnung der Fördereinrichtung im Endbereich der Reinigungseinrichtung wird diese Bewegung des Teiles des Erntegutes unterstützt, so daß dieses zur Vermeidung von Bewegungsunterbrechungen (beispielsweise Verstopfung) zuverlässig in Richtung der Ausfallöffnung gefördert wird. Darüber hinaus unterstützt es die Bewegung für den Fall, daß das Strohleitblech die Ausfallöffnung verdeckt, so daß der Teil des Erntegutes dem Häcksler zugeführt wird.

In Weiterbildung der Erfindung ist vorgesehen, daß die Fördereinrichtung zu- bzw. abschaltbar ist, wobei weiterhin im eingeschalteten Zustand die Möglichkeit besteht, die Förderleistung einzustellen bzw. zu regeln. Ein Abschalten der Fördereinrichtung ist beispielsweise dann vorgesehen, wenn die Ausfallöffnung von dem Strohleitblech nicht abgedeckt ist. Ist die Ausfallöffnung abgedeckt, wird die Fördereinrichtung zur Bewegungsunterstützung eingeschaltet, was insbesondere mit dem Verschwenken des Strohleitbleches in diese Stellung einhergeht. Je nach Volumen des von der Reinigungseinrichtung abgegebenen Teil des Erntegutes, welches gemessen werden kann, kann auch die Förderleistung der Fördereinrichtung eingestellt werden, wobei auch eine Regelung der Förderleistung vorgesehen werden kann.

In Weiterbildung der Erfindung handelt es sich in vorteilhafter Weise bei der Fördereinrichtung um ein Gebläse, da dieses in optimaler Weise den von der Reinigungseinrichtung abgegebenen Teil des Erntegutes weiter befördert. Hierbei finden insbesondere Radialgebläse Anwendung, die sich weitestgehend über die Breite der Reinigungseinrichtung erstrecken. Denkbar sind auch Windleitprofile oder auch Verteilerdüsen, die den von dem Gebläse erzeugten Druck auf den von der Reinigungseinrichtung abgegebenen Teil des Erntegutes wirken lassen.

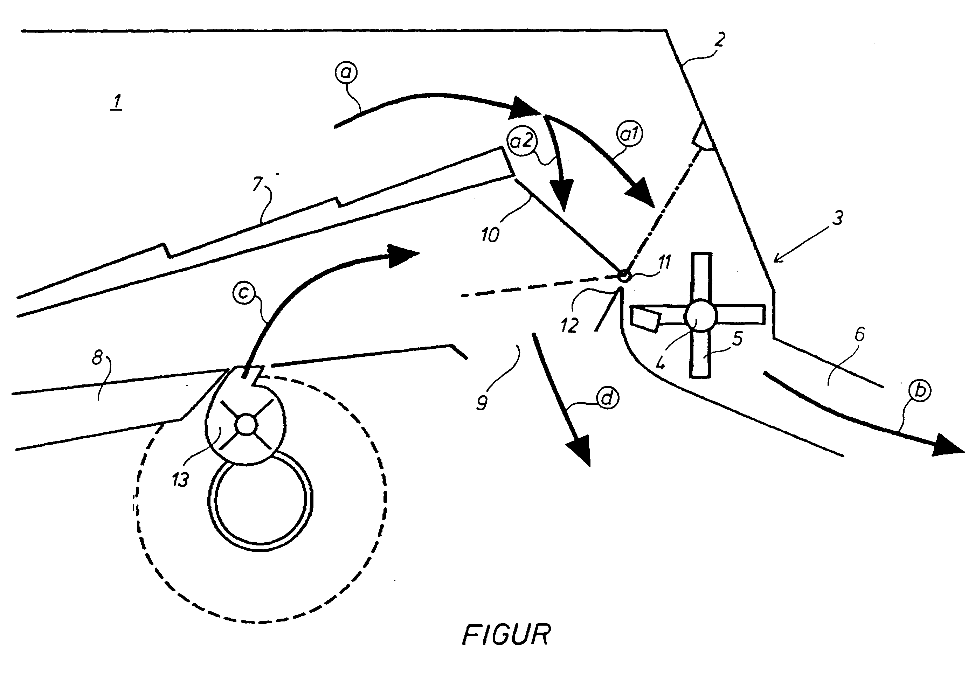

Im folgenden sind konstruktive Ausgestaltungen eines erfindungsgemäßen Mähdreschers anhand der Figur beschrieben.

In der Figur ist ein rückwärtiges Ende 1 eines Mähdreschers gezeigt, das einteilig oder anbaubar eine Strohhaube 2 aufweist. In einem Bereich unterhalb der Strohhaube 2 ist ein Häcksler 3 eingebaut oder anbaubar, wobei dieser Häcksler 3 im wesentlichen mehrere um eine Messerwelle 4 angeordnete Häckslermesser 5 aufweist. Die Ausgestaltung des Häckslers 3 ist alllgemein bekannt und an dieser Stelle von untergeordneter Bedeutung. Ausgangsseitig des Häckslers 3 ist im Endbereich der Strohhaube 2 eine Ausfallöffnung 6 vorgesehen. Weiterhin ragen in das rückwärtige Ende 1 Schüttler 7 hinein, die in ihrem Endbereich das ausgedroschene Langstroh abwerfen. In einem Bereich unterhalb der Schüttler 7 ist eine Reinigungseinrichtung 8 angeordnet, bei der es sich beispielsweise um eine Siebanordnung handelt, die bei Mähdreschern ebenfalls bekannt ist, an dieser Stelle eine untergeordnete Bedeutung hat und von ihrer Arbeitsweise her das ausgedroschene Korn von Verunreinigungen wie Spreu trennt. Der von der Reinigungseinrichtung 8 abgegebene Teil des Erntegutes gelangt über eine Ausfallöffnung 9, die in Fahrtrichtung des Mähdreschers betrachtet vor dem Häcksler 3 angeordnet ist, auf das Feld. Innerhalb des rückwärtigen Endes 1 ist in einem Endbereich von den Langstroh abwerfenden Schüttlern 7 ein Strohleitblech 10 angeordnet, welches um einen Schwenkpunkt 11 verschwenkbar ist. In einer besonderen Ausgestaltung der Erfindung ist der Schwenkpunkt 11 an einer Kante 12 angeordnet, wobei sich diese Kante 12 in einem Bereich zwischen der Ausfallöffnung 9 und dem Häcksler 3 befindet. In dem Endbereich der Reinigungseinrichtung 8 ist eine als Gebläse 13 ausgebildete Fördereinrichtung angeordnet, wobei diese in vorteilhafter Weise sich direkt an den Endbereich der Reinigungseinrichtung 8 anschließt, jedoch auch bis an die Kante der Ausfallöffnung 9 (die der Kante 12 gegenüberliegende Kante) heranreichen kann.

Durch die erfindungsgemäße Verschwenkbarkeit des Strohleitbleches 10 ergeben sich die folgenden Volumenströme:

Das von den Schüttlern 7 abgeworfene Langstroh a wird in der gezeigten Stellung des Strohleitbleches 10 in Form des Langstrohs a1 in die Einzugsöffnung des Häckslers geführt, dort zerkleinert und über die Ausfallöffnung 6 als Kurzstroh b (gehäckseltes Langstroh) abgegeben. In der strichpunktierten Stellung des Strohleitbleches 10 wird das Langstroh a in Form des Volumenstromes a2 in den Bereich der Ausfallöffnung 9 geführt und über diese auf das Feld abgeworfen. In dieser strichpunktierten Stellung des Strohleitbleches 10 erfolgt auch die Abgabe des Teils des von der Reinigungseinrichtung 8 kommenden Erntegutes, wobei dieser von dem Wind c des Gebläses 13 erfaßt wird und als Spreu d ebenfalls über die Ausfallöffnung 9 auf dem Feld abgeworfen wird. Wird das Strohleitblech 10 in die gestrichelt gezeichnete Stellung verschwenkt, wird sowohl das Langstroh a als auch der von der Reinigungseinrichtung 8 abgegebene Teil des Erntegutes, unterstützt von dem Wind c des Gebläses 13, in Richtung der Einzugsöffnung des Häckslers 3 befördert, dort zerkleinert und dann als Gemisch über die Ausfallöffnung 6 abgegeben.

## Patentansprüche

1. Mähdrescher mit einem am rückwärtigen Ende (1) des Mähdreschers innerhalb einer Strohhaube (2) angeordneten Häcksler (3), wobei in einem Endbereich von Stroh abwerfenden Schüttlern (7) ein Strohleitblech (10) angeordnet ist, das in einer ersten Stellung die Einzugsöffnung des Häckslers (3) abdeckt, wobei das von den Schüttlern (7) abgeworfene Stroh über eine Ausfallöffnung (9) abgegeben wird, und in einer zweiten Stellung die Einzugsöffnung des Häckslers (3) freigibt,
*dadurch gekennzeichnet*, daß das Strohleitblech (10) in eine weitere Stellung verschwenkbar ist, in der die Ausfallöffnung (9) derart weitestgehend abgedeckt wird, daß zumindest ein von einer Reinigungseinrichtung (8) des Mähdreschers abgegebener Teil des Erntegutes in die Einzugsöffnung des Häckslers (3) gelangt.

2. Mähdrescher nach Anspruch 1,
*dadurch gekennzeichnet*, daß der Schwenkpunkt (11) des Strohleitbleches (10) in Fahrtrichtung des Mähdreschers betrachtet in einem Bereich vor der Einzugsöffnung des Häckslers (3) angeordnet ist.

3. Mähdrescher nach Anspruch 1,
*dadurch gekennzeichnet*, daß der Schwenkpunkt (11) des Strohleitbleches (10) in Fahrtrichtung des Mähdreschers betrachtet an einer Kante (12) der Einzugsöffnung des Häckslers (3) angeordnet ist.

4. Mähdrescher nach einem der vorhergehenden Ansprüche,
*dadurch gekennzeichnet*, daß die Lagerstellen des Strohleitbleches (10) in der Strohhaube (2) des Mähdreschers oder in einem Rahmen bzw. Gehäuse des Häckslers (3) angeordnet sind.

5. Mähdrescher nach einem der vorhergehenden Ansprüche,
*dadurch gekennzeichnet*, daß das Strohleitblech (10) exzentrisch um den Schwenkpunkt (11) verschwenkbar ist.

6. Mähdrescher nach einem der vorhergehenden Ansprüche,
*dadurch gekennzeichnet*, daß das Strohleitblech (10) manuell im Bereich der Strohhaube (2) oder fernbedient verschwenkbar ist.

7. Mähdrescher nach einem der vorhergehenden Ansprüche,
*dadurch gekennzeichnet*, daß im Endbereich der Reinigungseinrichtung (8) eine Fördereinrichtung angeordnet ist, die den von der Reinigungseinrichtung (8) abgegebenen Teil des Erntegutes zumindest in Richtung der Ausfallöffnung fördert.

8. Mähdrescher nach einem der vorhergehenden Ansprüchen,
*dadurch gekennzeichnet*, daß die Fördereinrichtung zu- bzw. abschaltbar ist.

9. Mähdrescher nach einem der vorhergehenden Ansprüche,
*dadurch gekennzeichnet*, daß die Förderleistung der Fördereinrichtung einstellbar bzw. regelbar ist.

10. Mähdrescher nach einem der vorhergehenden Ansprüche,
*dadurch gekennzeichnet,* daß die Fördereinrichtung ein Gebläse (13) ist.

## Claims

1. A combine having a straw cutter (3) disposed at the rear end (1) of the combine inside a straw dome (2), wherein in an end region of shakers (7) which discard straw a straw guide plate (10) is disposed, which in a first position covers the feed opening of the straw cutter (3), wherein the straw discarded by the shakers (7) is discharged via a discharge opening (9), and in a second position uncovers the feed opening of the straw cutter (3),
**characterised in that** the straw guide plate (10) can be swivelled into another position in which the discharge opening (9) is very extensively covered in such a manner that at least one part of the harvested product discharged by a cleaning mechanism (8) of the combine arrives in the feed opening of the straw cutter (3).

2. A combine according to Claim 1,
**characterised in that** the pivot (11) of the straw guide plate (10) is disposed in a region in front of the feed opening of the straw cutter (3), viewed in the direction of travel of the combine.

3. A combine according to Claim 1,
**characterised in that** the pivot (11) of the straw guide plate (10) is disposed at one edge (12) of the feed opening of the straw cutter (3), viewed in the direction of travel of the combine.

4. A combine according to one of the preceding claims,
**characterised in that** the bearings of the straw guide plate (10) are disposed in the straw dome (2) of the combine or in a frame or housing of the straw cutter (3).

5. A combine according to one of the preceding Claims,
**characterised in that** the straw guide plate (10) can be swivelled eccentrically around the pivot (11).

6. A combine according to one of the preceding Claims,
**characterised in that** the straw guide plate (10) can be swivelled manually in the region of the straw dome (2) or by remote control.

7. A combine according to one of the preceding Claims,
**characterised in that** disposed in the end region of the cleaning device (8) is a conveying device which conveys the part of the harvested straw discharged by the cleaning device (8) at least towards the discharge opening.

8. A combine according to one of the preceding Claims,
**characterised in that** the conveying device can be switched on and off.

9. A combine according to one of the preceding Claims,
**characterised in that** the conveying capacity of the conveying device can be adjusted or regulated.

10. A combine according to one of the preceding Claims,
**characterised in that** the conveying device is a fan (13).

## Revendications

1. Moissonneuse-batteuse comprenant un hache-paille (3) disposé à l'extrémité arrière (1) de la moissonneuse-batteuse à l'intérieur d'un capot de paille (2), tandis qu'il est prévu, disposé dans une zone d'extrémité de secoueurs (7) qui rejettent de la paille, un déflecteur de paille (10) qui, dans une première position, obture l'ouverture d'entrée du hache-paille (3), la paille rejetée par les secoueurs (7) étant déposée par l'intermédiaire d'une ouverture de chute (9), et, dans une seconde position, libère l'ouverture d'entrée du hache-paille (3),
caractérisée en ce que le déflecteur de paille (10) peut être l'objet d'un basculement dans une autre position, dans laquelle l'ouverture de chute (9) est obturée dans une large mesure, d'une manière telle qu'au moins une partie de la récolte délivrée par un dispositif de nettoyage (8) de la moissonneuse-batteuse parvient dans l'ouverture d'entrée du hache-paille (3).

2. Moissonneuse-batteuse suivant la revendication 1, caractérisée en ce que, considéré suivant la direction de marche de la moissonneuse-batteuse, le point de basculement (11) du déflecteur de paille (10) est disposé dans une zone située en avant de l'ouverture d'entrée du hache-paille (3),

3. Moissonneuse-batteuse suivant la revendication 1, caractérisée en ce que, considéré suivant la direction de marche de la moissonneuse-batteuse, le point de basculement (11) du déflecteur de paille (10) est disposé à l'endroit d'un bord (12) de l'ouverture d'entrée du hache-paille (3).

4. Moissonneuse-batteuse suivant l'une des revendications précédentes, caractérisée en ce que les emplacements de palier du déflecteur de paille (10) sont disposés dans le capot de paille (2) de la moissonneuse-batteuse ou dans un châssis ou bâti du hache-paille (3).

5. Moissonneuse-batteuse suivant l'une des revendications précédentes, caractérisée en ce que le déflecteur de paille (10) peut être monté basculant d'une manière excentrée autour du point de basculement (11).

6. Moissonneuse-batteuse suivant l'une des revendications précédentes, caractérisée en ce que le déflecteur de paille (10) peut être l'objet d'un basculement manuel dans la zone du capot de paille (2) ou en étant commandé à distance.

7. Moissonneuse-batteuse suivant l'une des revendications précédentes, caractérisée en ce qu'il est prévu, disposé dans la zone d'extrémité du dispositif de nettoyage (8), un dispositif de transport qui transporte, au moins en direction de l'ouverture de chute, la partie de la récolte qui est délivrée par le dispositif de nettoyage (8).

8. Moissonneuse-batteuse suivant l'une des revendications précédentes, caractérisée en ce que le dispositif de transport peut être mis en service ou hors service.

9. Moissonneuse-batteuse suivant l'une des revendications précédentes, caractérisée en ce que la puissance de transport du dispositif de transport peut faire l'objet d'un réglage ou d'une régulation.

10. Moissonneuse-batteuse suivant l'une des revendications précédentes, caractérisée en ce que le dispositif de transport est une souffleuse (13).
